# FASCICULE DE BREVET EUROPEEN

(11) **EP 1 717 525 B1**
(45) Date de publication et mention de la délivrance du brevet: **28.12.2016**
(21) Numéro de dépôt: 06007172.7
(22) Date de dépôt: 05.04.2006
(51) Int. Cl.: B60H 1/00, F24H 1/00, F24H 9/18, H05B 3/14, F28D 21/00, F24H 3/08, F24H 3/04, F28D 1/04, H05B 3/50

(54) **DISPOSITIF DE CHAUFFAGE POUR INSTALLATION DE CHAUFFAGE, DE VENTILATION ET/OU DE CLIMATISATION D'UN HABITACLE DE VÉHICULE AUTOMOBILE**
VORRICHTUNG ZUM BEHEIZEN, BELÜFTEN UND/ODER KÜHLEN VON FAHRZEUGRÄUMEN
HEATING, VENTILATING AND/OR AIR CONDITIONING DEVICE FOR MOTOR VEHICLE COMPARTMENT

(30) Priorité: 26.04.2005 FR 0504139
(43) Date de publication de la demande: 02.11.2006
(73) Titulaire: VALEO SYSTEMES THERMIQUES, 78321 Le Mesnil St Denis Cedex (FR)
(72) Inventeur: Sabatier, Claire, 78000 Versailles (FR); Pierron, Frédéric, 78120 Rambouillet (FR)

(56) Documents cités:
- EP-A- 0 919 409
- EP-A- 1 429 084
- EP-A- 1 586 826
- DE-B3- 10 306 630
- FR-A- 2 793 546
- US-A1- 2002 023 735
- US-A1- 2002 157 814
- US-A1- 2004 084 431
- US-B1- 6 180 930
- US-B1- 6 561 263

## Description

L'invention a trait à un dispositif de chauffage, en particulier pour l'habitacle d'un véhicule automobile.

Elle concerne plus particulièrement un dispositif du type comprenant un radiateur principal comprenant un faisceau de tubes de circulation de fluide caloporteur et un radiateur secondaire.

Un tel dispositif est destiné à être intégré dans une installation de chauffage, de ventilation et/ou de climatisation comprenant un circuit d'air. L'air est chauffé en traversant le dispositif. Il peut être ensuite soufflé, par exemple dans l'habitacle d'un véhicule automobile.

Un tel dispositif de chauffage comprend couramment un radiateur principal comprenant un faisceau de tubes dans lesquels circule un fluide caloporteur chaud, habituellement le liquide de refroidissement du moteur du véhicule.

Parfois, l'énergie thermique fournie à l'air par ce radiateur principal est insuffisante. C'est par exemple le cas par temps froid et/ou pendant la -phase de démarrage du moteur.

C'est pourquoi on dispose généralement à côté du radiateur principal un radiateur secondaire pour fournir l'énergie thermique manquante. On connaît deux types de montage d'un tel dispositif.

Selon un premier type de montage, le radiateur principal est fixé dans un conduit d'air et le radiateur secondaire est fixé dans ce même conduit d'air. Les moyens de fixation respectifs du radiateur principal et du radiateur secondaire sont indépendants les uns des autres.

Selon un autre type de montage, le radiateur secondaire est fixé au radiateur principal au moyen d'éléments de fixation rapportés, et l'ensemble est fixé dans un conduit de circulation d'air. Un exemple d'un tel montage est décrit dans FR 2 771 342. Ce document décrit un dispositif de chauffage du type précité dans lequel le radiateur principal est pourvu de deux flasques destinées à assurer la fixation du radiateur secondaire. Un dispositif de chauffage de ce genre est décrit dans US 6 561 263 B1.

L'objet de l'invention est de proposer un autre type de montage offrant des performances améliorées en matière d'écoulement d'air et d'échange thermique ainsi qu'un assemblage et une configuration simplifiés.
L'invention prévoit un dispositif de chauffage comprenant un radiateur principal et un radiateur secondaire, dans lequel le radiateur principal et le radiateur secondaire sont assemblés en un module indissociable par mise en commun d'au moins un élément constitutif.

Le module ainsi assemblé est destiné à être monté dans le conduit d'air. L'assemblage des radiateurs principal et secondaire ne nécessite pas de pièces de fixation supplémentaires. La structure du module est ainsi particulièrement simple rendant la fabrication du module aisée et peu coûteuse. Les radiateurs sont en outre disposés au plus proche l'un de l'autre et partagent des éléments communs améliorant ainsi les performances thermiques du dispositif ainsi que l'écoulement de l'air.

Avantageusement, le radiateur secondaire comprend un faisceau d'éléments chauffants tubulaires. La configuration du radiateur secondaire est alors similaire à la configuration du radiateur principal.

Dans un mode de réalisation, le radiateur principal et le radiateur secondaire ont en commun au moins une plaque de jonction disposée à la fois à une extrémité du faisceau de tubes de circulation de fluide et à une extrémité du faisceau d'éléments chauffants tubulaires. En outre, la plaque de jonction rigidifie le module.

De préférence, le radiateur principal et le radiateur secondaire comprennent alors en outre chacun une pluralité d'intercalaires d'échange de chaleur distincts intercalés respectivement dans le faisceau de tubes de circulation de fluide caloporteur et dans le faisceau d'éléments chauffants tubulaires.

Dans ce cas, la plaque de jonction est avantageusement en contact avec un intercalaire du faisceau de tubes de circulation de fluide caloporteur et un intercalaire du faisceau d'éléments chauffants tubulaires.

Dans un autre mode de réalisation, le radiateur principal et le radiateur secondaire ont en commun une pluralité d'intercalaires d'échange de chaleur, certains des intercalaires d'échange de chaleur étant intercalés entre deux tubes d'échange de chaleur adjacents ainsi qu'entre deux éléments chauffants tubulaires adjacents. Cette configuration diminue le nombre de pièces constituant le module et par conséquent facilite sa fabrication. Les éléments chauffants tubulaires peuvent être rapportés sur le radiateur principal muni d'intercalaires d'échange de chaleur dépassant du radiateur.

De préférence, les éléments chauffants tubulaires sont constitués d'un tube dans lequel est logé un organe chauffant allongé. Les éléments chauffant tubulaires sont alors particulièrement simples à réaliser. En outre, l'organe chauffant est protégé par le tube de la corrosion et d'éventuelles projections d'eau.

L'organe chauffant comprend alors avantageusement une résistance électrique de forme allongée enveloppée d'un matériau électriquement isolant. Le tube peut alors dégager de la chaleur sur l'essentiel de sa longueur. Le contact entre le tube et la résistance, générateur de courts-circuits, est évité grâce au matériau isolant.
La résistance électrique est de préférence du type résistance à coefficient de température positif ou résistance CTP, de manière à adapter la puissance électrique consommée à la puissance thermique désirée.

L'organe chauffant allongé est avantageusement enduit d'un matériau thermo-conducteur pour améliorer le transfert thermique entre l'organe chauffant et le tube.

Dans un mode de réalisation préféré, le dispositif comprend en outre une unité de contrôle électronique, intégrant des éléments de commutation de puissance susceptibles de commuter les éléments chauffants tubulaires, montée sur ledit module.

L'unité de contrôle électronique comprend alors de préférence des organes de dissipation thermique disposés à proximité des éléments de commutation de puissance.

Dans ce cas, certains des organes de dissipation thermique sont avantageusement en contact avec des éléments chauffants tubulaires pour évacuer la chaleur des éléments de commutation de puissance vers les éléments chauffants tubulaires.

Le radiateur secondaire comprend en outre des éléments tubulaires supplémentaires non chauffants disposés dans le faisceau d'éléments chauffants tubulaires. Dans le cas où les radiateurs partagent des intercalaires, il est nécessaire de disposer un élément tubulaire en face de chaque tube d'une rangée de tubes du radiateur principal. Or le nombre d'éléments chauffants tubulaires est déterminé en fonction de la puissance thermique d'appoint nécessaire. Ce nombre est le plus souvent moindre que le nombre de tubes d'une rangée de tubes du radiateur principal. Les éléments tubulaires supplémentaires non chauffant servent ainsi à compléter le faisceau d'éléments chauffants tubulaires. Plus généralement, les éléments tubulaires supplémentaires non chauffants servent à répartir ces éléments chauffants tubulaires sur la longueur du radiateur principal tout en gardant une structure de radiateur secondaire rigide.

Avantageusement, les éléments chauffants tubulaires et les éléments tubulaires supplémentaires non chauffants sont des tubes de même configuration et sont intercalés dans le faisceau pour permettre en particulier une répartition uniforme des éléments chauffants tubulaires le long du radiateur principal.

D'autres caractéristiques et avantages de l'invention apparaîtront à l'examen de la description détaillée ci-après, et des dessins annexés, sur lesquels :
- la figure 1 est une vue en perspective générale d'un dispositif selon l'invention,
- la figure 2 est une vue partielle en coupe selon le plan II du dispositif de la figure 1 dans un premier mode de réalisation,
- la figure 3 est une vue partielle en coupe selon le plan II du dispositif de la figure 1 selon un autre mode de réalisation,
- la figure 4 est une vue en plan d'un élément chauffant tubulaire du dispositif selon l'invention,
- la figure 5 est une vue de face d'un élément constitutif de l'élément de chauffage tubulaire de la figure 4 pris isolément,
- la figure 6 est une vue en coupe selon la ligne VI de l'élément de la figure 5,
- la figure 7 est une vue de dessus en plan et plus détaillée du dispositif de la figure 1, et
- la figure 8 est une vue en coupe selon la ligne VIII du dispositif de la figure 7.

Les dessins annexés pourront, non seulement servir à compléter l'invention, mais aussi contribuer à sa définition, le cas échéant.

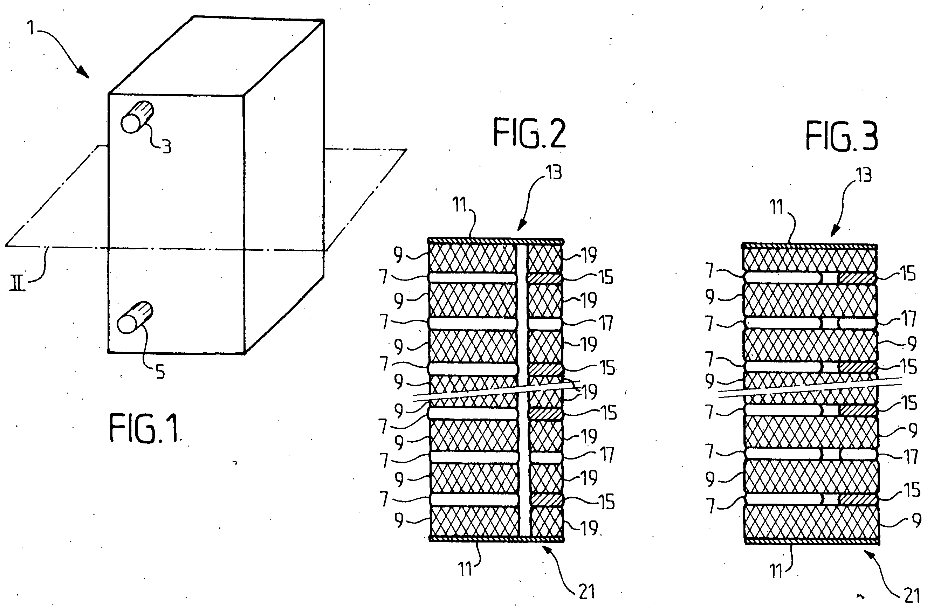

Le dispositif de chauffage 1 illustré sur la figure 1 est destiné à être monté dans un conduit de circulation d'air d'une installation de chauffage, de ventilation et/ou de climatisation, par exemple d'un véhicule automobile. L'air en traversant le dispositif 1 est chauffé. Cet air peut être ensuite soufflé dans l'habitacle du véhicule. Le dispositif 1 comprend une entrée de fluide 3 et une sortie de fluide 5 permettant de relier ce dispositif au reste d'un circuit de circulation de fluide caloporteur. Ce fluide caloporteur est par exemple le fluide de refroidissement du moteur du véhicule.

Comme indiqué sur la figure 2, le dispositif 1 comprend un faisceau de tubes de circulation de fluide caloporteur 7. Dans le mode de réalisation illustré sur la figure 2, les tubes 7 présentent chacun deux grandes faces parallèles entre elles et relativement proche l'une de l'autre, reliées par deux portions coudées. De tels tubes sont appelés "tubes plats". Les tubes 7 sont disposés alignés selon une unique rangée. D'autres types de tubes peuvent être utilisés parmi lesquels des tubes de section circulaire, ou tubes ronds, des tubes dont la section sensiblement ovale présente un rétrécissement central, encore appelés "haricots", etc. Le faisceau de tubes 7 peut également comporter plusieurs rangées de tubes.

Un intercalaire d'échange de chaleur 9 est interposé à chaque fois entre deux tubes 7. Un intercalaire 9 est également prévu au contact de chacun des tubes 7 d'extrémité du faisceau, du côté extérieur au faisceau. Les intercalaires 9 sont par exemple des intercalaires ondulés. Ils sont obtenus par pliages successifs d'une fine bande de tôle métallique, appelée feuillard, de manière à former une série d'ondulations.

Selon un autre mode de réalisation non illustré, les intercalaires 9 peuvent être remplacés par des éléments rectangulaires de feuillard métallique disposés perpendiculairement aux tubes et munis de trous pour le passage des tubes 7. Ces éléments sont appelés ailettes. Les intercalaires 9 et les ailettes ont la même fonction qui est d'augmenter la surface d'échange thermique.

Deux boîtes collectrices non représentées accueillent respectivement l'une et l'autre des extrémités de chacun des tubes 7. L'entrée de fluide 3 est en communication avec l'une de ces boîtes, tandis que la sortie de fluide 5 est en communication avec l'autre boîte. Ici, les boîtes collectrices sont considérées disposées opposées par rapport au faisceau de tubes 7. Dans d'autres modes de réalisation, les boîtes collectrices peuvent être disposées côte à côte, en particulier lorsque le faisceau assure une circulation du fluide en "U" (c'est-à-dire lorsque l'entrée du fluide caloporteur se fait du même côté du faisceau de tubes 7 que sa sortie).

Deux plaques de jonction 11, encore appelées "joues", sont en contact avec les intercalaires 9 disposés aux extrémités du faisceau de tubes 7 et sont en outre en contact chacun avec l'une et l'autre des boîtes collectrices. Les plaques 11 rigidifient l'ensemble formé des tubes 7, des intercalaires 9 et des boîtes collectrices. L'ensemble constitué des tubes 7, des intercalaires 9, des boîtes collectrices et des plaques 11 forme un échangeur de chaleur de type radiateur. Cet ensemble sera désigné ci-après radiateur principal 13.

En fonctionnement, l'air traversant le dispositif 1 reçoit de la chaleur du liquide de refroidissement moteur en circulation dans les tubes 7.

Le dispositif 1 comprend en outre un faisceau d'éléments chauffants tubulaires 15. Les éléments 15 sont de préférence des éléments chauffants électriques. Dans cet exemple de réalisation, un élément tubulaire non chauffant 17 de forme analogue aux éléments 15 est disposé à chaque fois entre deux éléments 15. Les éléments 17 sont parfois qualifiés "d'inactifs" ou "morts".

La répartition des éléments 17 dans le faisceau d'éléments 15 illustrée sur la figure 2 est un exemple. D'autres répartitions sont envisageables comme d'intercaler à chaque fois deux éléments 17 entre deux éléments 15. En pratique, le nombre d'éléments 15 peut être déterminé en fonction de la puissance de chauffage désirée. Le nombre d'éléments 17 peut être alors choisi de manière à obtenir une répartition uniforme des éléments 15 sur tout le long du radiateur 13 tout en gardant une bonne rigidité du radiateur 21. Dans d'autres cas, la répartition des éléments 15 pourrait ne pas être uniforme sur toute la longueur du radiateur 13, en particulier si l'on souhaite concentrer la puissance de chauffage sur une zone du radiateur 13 plutôt qu'une autre. Dans ce cas, les puissances de chauffage individuelles des éléments 15 peuvent également être différentes les unes des autres, permettant ainsi de conserver éventuellement une répartition uniforme des éléments 15 parmi les éléments 17.

Le faisceau de tubes 7 et le faisceau d'éléments 15 et 17 sont de préférence disposés selon des plans essentiellement parallèles entre eux de manière à obtenir des caractéristiques d'échange thermique sensiblement homogènes en tout point du module 1. Toutefois, ces plans peuvent être légèrement inclinés l'un par rapport à l'autre.

Des intercalaires d'échange de chaleur 19 sont à chaque fois interposés entre deux éléments adjacents 15,17, c'est-à-dire entre un élément 15 et un élément 17. Un intercalaire 19 est également disposé à chaque fois au contact des éléments 15,17 d'extrémités du faisceau, du côté extérieur audit faisceau. Les intercalaires 19 sont ici de forme analogue aux intercalaires 9. Les intercalaires 19 peuvent être remplacés par des ailettes. Chacun des intercalaires 19 disposés aux extrémités du faisceau est en contact avec la plaque 11.

L'ensemble formé des éléments 15, des éléments 17, des intercalaires 19 et des plaques 11 forme un radiateur désigné ci-après radiateur secondaire 21.

Les tubes 7, les intercalaires 9 et les plaques 11 d'une part, les éléments 15, les éléments 17, les intercalaires 19 et les plaques 11 d'autre part, sont maintenus ensemble fixement.

Le radiateur principal 13 et le radiateur secondaire 21 sont ainsi assemblés en un module indissociable par la mise en commun des plaques 11. Un tel module est parfois appelé "multi-échangeur".

La figure 3 illustre un mode de réalisation différent du dispositif de la figure 1 dans une vue analogue à la figure 2. Dans ce mode de réalisation, les intercalaires 9 du radiateur 13 sont prolongés de manière à remplacer les intercalaires 19 du radiateur 21. Un intercalaire 9 est en contact avec deux tubes 7 adjacents, un élément 15 et un élément 17. Le radiateur 13 et le radiateur 21 sont ici assemblés en un module indissociable par la mise en commun des intercalaires 9 et des plaques de jonction 11.

Dans cette configuration, le radiateur 13 peut être assemblé au préalable puis recevoir les éléments 15 et 17 ultérieurement.

On note que dans ce mode de réalisation le nombre d'éléments 17 est en outre fonction du nombre de tubes 7 du faisceau du radiateur 13. En effet, chacun de ces tubes 7 doit avoir en vis-à-vis soit un élément 15 soit un élément 17.

La figure 3 montre des intercalaires 9 ondulés mais il est possible d'employer des ailettes disposées perpendiculairement à l'axe des tubes 7 et des éléments 15 et 17. Dans ce cas, les ailettes sont pourvues de trous pour le passage des tubes 7 ainsi que de trous pour le passage des éléments 15 et 17. Avantageusement, les trous pour les éléments 15 et 17 sont ouverts vers le bord extérieur des ailettes pour permettre d'insérer facilement ces éléments par le côté du radiateur 21, par exemple une fois le radiateur 13 assemblé.

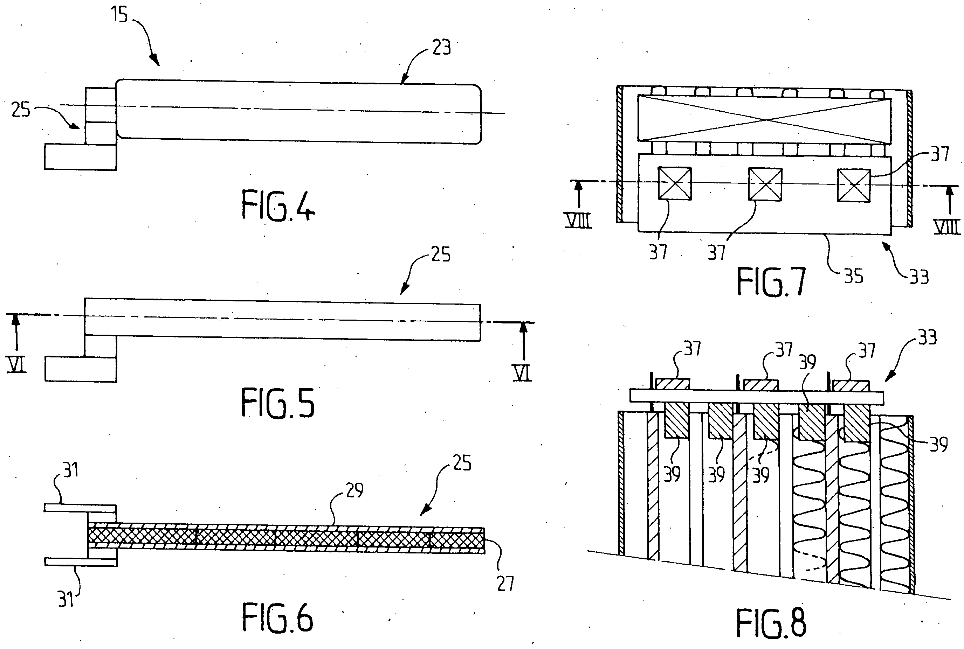

L'élément chauffant tubulaire 15 illustré à titre d'exemple sur la figure 4 comprend un tube 23 logeant une résistance chauffante 25 de forme allongée. Dans ce cas, un élément non chauffant est avantageusement constitué d'un tube 23. Le tube 23 est ici un tube plat en aluminium mais peut être de tout autre type capable de loger une résistance 25. La résistance 25 est maintenue dans le tube 23 au moyen de résine ou de colle, de préférence thermo-conductrice en sorte que l'échauffement de la résistance 25 puisse être convenablement transmis aux parois du tube 23.

La résistance 25 illustrée sur les figures 5 et 6 est une résistance à coefficient de température positif ou résistance CTP. Une résistance CTP a une valeur résistive variant très fortement avec la température. Cette valeur croît très rapidement au-delà d'un seuil de température (seuil critique). Une résistance CTP est donc autorégulée en température, la puissance électrique s'ajustant d'elle-même pour une température de travail à peu près constante en régime établi. En conséquence, les résistances CTP permettent d'adapter la puissance électrique consommée à la puissance thermique désirée.

La résistance 25 est essentiellement constituée d'éléments chauffants 27 de type CTP, ici d'allure allongée, entourés d'une gaine d'isolement électrique 29, par exemple un film de matière plastique.

À une extrémité, la résistance 25 présente deux pattes de connexion 31 généralement planes. Les plaques 31 sont disposées respectivement dans deux plans parallèles au plan de la résistance 25. Une fois la résistance 25 logée dans le tube 23 (figure 4), les pattes 31 dépassent du tube 23 pour permettre le contact de la résistance avec le reste d'un circuit électronique de puissance.
Les figures 7 et 8 illustrent conjointement un mode de réalisation préférée du dispositif 1 comprenant en outre une unité de contrôle électronique 33. L'unité 33 est essentiellement constituée d'une plaque support 35 rectangulaire disposée perpendiculairement aux éléments 15 et 17. La plaque 35 supporte des éléments de commutation de puissance 37 de type MOS disposés à chaque fois en regard des pattes 31 des éléments 15. Les éléments 37 peuvent ainsi commuter les résistances 25.

La plaque support 35 supporte des organes de dissipation thermique 39 sous la forme de plaques métalliques, par exemple rectangulaires, disposées à la fois à proximité des éléments 37 et en contact avec un ou plusieurs éléments 17 ou 15. La chaleur engendrée par l'excitation des éléments 37 est dissipée dans les éléments 15 et/ou 17 par l'intermédiaire des organes 39. Dans d'autres modes de réalisation, la plaque support 35 peut assurer elle-même la fonction de dissipateur thermique. En outre, la plaque support 35 peut intégrer des cartes de circuit imprimé aussi appelées PCB (printed circuit board) et/ou des éléments d'électronique de contrôle.

Pour la fabrication du dispositif 1, on assemble au préalable le module 1 associant le radiateur 13 et le radiateur 21 dont les éléments 15 sont, dans un premier temps, dépourvus des résistances 25. Pour ce faire, les tubes 7, les intercalaires 9 et les plaques 11 sont brasés ensemble pour former le radiateur 13 tandis que les éléments 15 dépourvus des résistances 25 sont brasés avec la plaque 11 et le cas échéant avec les intercalaires 19 pour former le radiateur 13. De préférence, le radiateur 15 et le radiateur 21 sont brasés au cours d'une même opération de brasage.

En d'autres termes, le radiateur 21 comprend à ce moment un faisceau de tubes 23 uniquement. Puis, les résistances 25 sont logées dans certains des tubes 23 pour former des éléments 17. Enfin, l'unité 33 est rapportée sur ce module.

Les modes de réalisation décrits ci-dessus présentent des radiateurs associés par le partage de là plaque 11 ou des intercalaires 9. D'autres éléments constitutifs pourraient être mis en commun dans le cas où des technologies différentes seraient mises en oeuvre pour le radiateur principal et/ou le radiateur secondaire.

L'invention n'est pas limitée aux modes de réalisation décrits ci-dessous uniquement à titre d'exemples mais englobe toutes les variantes que pourra envisager l'homme du métier dans le cadre des revendications ci-après.

## Revendications

1. Dispositif de chauffage (1), pour l'habitacle d'un véhicule automobile, comprenant un radiateur principal (13) comprenant un faisceau de tubes de circulation de fluide caloporteur (7) et un radiateur secondaire (21), comprenant un faisceau d'éléments chauffants tubulaires (15), **caractérisé en ce que** le radiateur principal (13) et le radiateur secondaire (21) sont assemblés en un module indissociable par mise en commun d'au moins une plaque de jonction (11) disposée à la fois à une extrémité du faisceau de tubes de circulation de fluide (7) et à une extrémité du faisceau d'éléments chauffants tubulaires (15), et **en ce que** les éléments chauffants tubulaires (15) sont constitués d'un tube (23) dans lequel est logé un organe chauffant allongé.

2. Dispositif selon la revendication 1, **caractérisé en ce que** le radiateur principal (13) et le radiateur secondaire (21) comprennent en outre chacun une pluralité d'intercalaires d'échange de chaleur distincts (9;19) intercalés respectivement dans le faisceau de tubes de circulation de fluide caloporteur (7) et dans le faisceau d'éléments chauffants tubulaires (15).

3. Dispositif selon la revendication 2, **caractérisé en ce que** la plaque de jonction (11) est en contact avec un intercalaire d'échange de chaleur (9) du faisceau de tubes de circulation de fluide caloporteur (7) et un intercalaire (19) du faisceau d'éléments chauffants tubulaires (15).

4. Dispositif selon l'une des revendications 2 ou 3, **caractérisé en ce que** le radiateur principal (13) et le radiateur secondaire (21) ont en commun une pluralité d'intercalaires d'échange de chaleur (9), certains des intercalaires d'échange de chaleur (9) étant intercalés entre deux tubes de circulation de fluide caloporteur (7) adjacents ainsi qu'entre deux éléments chauffants tubulaires (15) adjacents.

5. Dispositif selon l'une des revendications 1 à 4, **caractérisé en ce que** l'organe chauffant allongé (25) comprend une résistance électrique (27) de forme allongée enveloppée d'un matériau électriquement isolant (29).

6. Dispositif selon la revendication 5, **caractérisé en ce que** la résistance électrique (27) est du type résistance à coefficient de température positif.

7. Dispositif selon l'une des revendications précédentes, **caractérisé en ce que** l'organe chauffant allongé (25) est enduit d'un matériau thermo-conducteur.

8. Dispositif selon l'une quelconque des revendications précédentes, **caractérisé en ce qu'**il comprend en outre une unité de contrôle électronique (33), intégrant des éléments de commutation de puissance (37) susceptibles de commuter les éléments chauffants tubulaires (15), montée sur ledit module.

9. Dispositif selon la revendication 8, **caractérisé en ce que** l'unité de contrôle électronique (33) comprend des organes de dissipation thermique (39) disposés à proximité des éléments de commutation de puissance (37).

10. Dispositif selon la revendication 9, **caractérisé en ce que** certains des organes de dissipation thermique (39) sont en contact avec des éléments chauffants tubulaires (15).

11. Dispositif selon l'une quelconque des revendications précédentes, **caractérisé en ce que** le radiateur secondaire (21) comprend en outre des éléments tubulaires supplémentaires non chauffants (17) disposés dans le faisceau d'éléments chauffants tubulaires (15).

12. Dispositif selon la revendication 11, **caractérisé en ce que** les éléments chauffants tubulaires (15) et les éléments tubulaires supplémentaires non chauffants (17) sont des tubes (23) de même configuration et sont intercalés dans le faisceau.

## Patentansprüche

1. Heizvorrichtung (1) für den Innenraum eines Kraftfahrzeugs, die einen Hauptheizkörper (13), der ein Bündel von Wärmeträgerfluid-Strömungsrohren (7) enthält, und einen Sekundärheizkörper (21) enthält, der ein Bündel von rohrförmigen Heizelementen (15) enthält, **dadurch gekennzeichnet, dass** der Hauptheizkörper (13) und der Sekundärheizkörper (21) in einem untrennbaren Modul durch gemeinsame Nutzung mindestens einer Verbindungsplatte (11) zusammengebaut sind, die sowohl an einem Ende des Bündels von Fluidströmungsrohren (7) als auch an einem Ende des Bündels von rohrförmigen Heizelementen (15) angeordnet ist, und dass die rohrförmigen Heizelemente (15) aus einem Rohr (23) bestehen, in dem ein längliches Heizorgan untergebracht ist.

2. Vorrichtung nach Anspruch 1, **dadurch gekennzeichnet, dass** der Hauptheizkörper (13) und der Sekundärheizkörper (21) außerdem je eine Vielzahl von unterschiedlichen Wärmetauscher-Zwischenstücken (9; 19) enthalten, die in das Bündel von Wärmeträgerfluid-Strömungsrohren (7) bzw. in das Bündel von rohrförmigen Heizelementen (15) eingefügt sind.

3. Vorrichtung nach Anspruch 2, **dadurch gekennzeichnet, dass** die Verbindungsplatte (11) mit einem Wärmetauscher-Zwischenstück (9) des Bündels von Wärmeträgerfluid-Strömungsrohren (7) und mit einem Zwischenstück (19) des Bündels von rohrförmigen Heizelementen (15) in Kontakt ist.

4. Vorrichtung nach einem der Ansprüche 2 oder 3, **dadurch gekennzeichnet, dass** der Hauptheizkörper (13) und der Sekundärheizkörper (21) eine Vielzahl von Wärmetauscher-Zwischenstücken (9) gemeinsam haben, wobei bestimmte der Wärmetauscher-Zwischenstücke (9) zwischen zwei benachbarte Wärmeträgerfluid-Strömungsrohre (7) sowie zwischen zwei benachbarte rohrförmige Heizelemente (15) eingefügt sind.

5. Vorrichtung nach einem der Ansprüche 1 bis 4, **dadurch gekennzeichnet, dass** das längliche Heizorgan (25) einen elektrischen Widerstand (27) länglicher Form enthält, der mit einem elektrisch isolierenden Material (29) umhüllt ist.

6. Vorrichtung nach Anspruch 5, **dadurch gekennzeichnet, dass** der elektrische Widerstand (27) von der Art Widerstand mit positivem Temperaturkoeffizienten ist.

7. Vorrichtung nach einem der vorhergehenden Ansprüche, **dadurch gekennzeichnet, dass** das längliche Heizorgan (25) mit einem wärmeleitenden Material beschichtet ist.

8. Vorrichtung nach einem der vorhergehenden Ansprüche, **dadurch gekennzeichnet, dass** sie außerdem eine auf das Modul montierte elektronische Kontrolleinheit (33) enthält, die Leistungsumschaltelemente (37) umfasst, die die rohrförmigen Heizelementen (15) umschalten können.

9. Vorrichtung nach Anspruch 8, **dadurch gekennzeichnet, dass** die elektronische Kontrolleinheit (33) Wärmeableitungsorgane (39) enthält, die in der Nähe der Leistungsumschaltelemente (37) angeordnet sind.

10. Vorrichtung nach Anspruch 9, **dadurch gekennzeichnet, dass** bestimmte der Wärmeableitungsorgane (39) mit rohrförmigen Heizelementen (15) in Kontakt sind.

11. Vorrichtung nach einem der vorhergehenden Ansprüche, **dadurch gekennzeichnet, dass** der Sekundärheizkörper (21) außerdem zusätzliche nicht heizende rohrförmige Elemente (17) enthält, die im Bündel von rohrförmigen Heizelementen (15) angeordnet sind.

12. Vorrichtung nach Anspruch 11, **dadurch gekennzeichnet, dass** die rohrförmigen Heizelemente (15) und die zusätzlichen nicht heizenden rohrförmigen Elemente (17) Rohre (23) gleicher Konfiguration und in das Bündel eingefügt sind.

## Claims

1. Heating device (1) for the interior compartment of a motor vehicle, comprising a main heater (13) comprising a core bundle of tubes for the circulation of a heat-transfer fluid (7) and a secondary heater (21) comprising a core bundle of tubular heating elements (15), **characterized in that** the main heater (13) and the secondary heater (21) are assembled into an inseparable module by having at least one junction plate (11) in common that is positioned both at one end of the core bundle of tubes for the circulation of fluid (7) and at one end of the core bundle of tubular heating elements (15), and **in that** the tubular heating elements (15) are made up of a tube (23) in which an elongate heating member is housed.

2. Device according to Claim 1, **characterized in that** the main heater (13) and the secondary heater (21) furthermore each comprise a plurality of distinct heat exchange inserts (9; 19) inserted respectively in the core bundle of tubes for the circulation of heat-transfer fluid (7) and in the core bundle of tubular heating elements (15).

3. Device according to Claim 2, **characterized in that** the junction plate (11) is in contact with a heat exchange insert (9) of the core bundle of tubes for the circulation of heat-transfer fluid (7) and an insert (19) of the core bundle of tubular heating elements (15).

4. Device according to one of Claims 2 and 3, **characterized in that** the main heater (13) and the secondary heater (21) have in common a plurality of heat exchange inserts (9), some of the heat exchange inserts (9) being inserted between two adjacent tubes for the circulation of heat-transfer fluid (7) and between two adjacent tubular heating elements (15).

5. Device according to one of Claims 1 to 4, **characterized in that** the elongate heating member (25) comprises an electrical resistance (27) of elongate shape enveloped in an electrically insulating material (29).

6. Device according to Claim 5, **characterized in that** the electric resistance (27) is of the positive temperature co-efficient resistance type.

7. Device according to one of the preceding claims, **characterized in that** the elongate heating member (25) is coated with a heat-conducting material.

8. Device according to any one of the preceding claims, **characterized in that** it further comprises an electronic control unit (33) incorporating power switching elements (37) capable of switching the tubular heating elements (15) and mounted on the said module.

9. Device according to Claim 8, **characterized in that** the electronic control unit (33) comprises heat sink members (39) arranged near the power switching elements (37).

10. Device according to Claim 9, **characterized in that** some of the heat sink members (39) are in contact with tubular heating elements (15).

11. Device according to any one of the preceding claims, **characterized in that** the secondary heater (21) further comprises additional non-heating tubular elements (17) arranged in the core bundle of tubular heating elements (15).

12. Device according to Claim 11, **characterized in that** the tubular heating elements (15) and the additional non-heating tubular elements (17) are tubes (23) with the same configuration and are inserted into the core bundle.
